# EUROPEAN PATENT SPECIFICATION

(11) **EP 0 545 293 B1**
(45) Date of publication and mention of the grant of the patent: **24.09.1997**
(21) Application number: 92120245.3
(22) Date of filing: 27.11.1992
(51) Int. Cl.: H01M 2/24, H01M 2/28

(54) **Plate and cell connector for a battery**
Platten- und Zellenverbinder für eine Batterie
Connecteur intercellulaire et interélectrodique pour une batterie

(30) Priority: 04.12.1991 US 803498
(43) Date of publication of application: 09.06.1993
(73) Proprietor: GNB INDUSTRIAL BATTERY COMPANY, Lombard, Illinois 60148-3249 (US)
(72) Inventor: Cole, Bruce A., Northbrook, Illinois (US); Melichar, Paul Jan, Bolingbrook, Illinois (US)
(74) Representative: Hoeger, Stellrecht & Partner

(56) References cited:
- EP-A- 0 244 943
- EP-A- 0 264 862
- DE-A- 2 354 150
- DE-A- 2 631 489
- FR-A- 2 267 643
- FR-A- 2 374 747
- FR-A- 2 576 150
- GB-A- 1 186 406
- GB-A- 2 098 383
- US-A- 1 874 404
- US-A- 4 780 379
- US-A- 5 149 605
- PATENT ABSTRACTS OF JAPAN vol. 12, no. 265 (E-637)(3112) 23 July 1988
- PATENT ABSTRACTS OF JAPAN vol. 12, no. 204 (E-620)11 June 1988

## Description

This invention relates to a battery including at least two cell elements separated by a wall, the cell elements having a plurality of positive plates and negative plates alternately interleaved with one another.

More particularly, the invention relates to a novel grid, strap, strap coupling means and intercell weld means for batteries, including lead-acid batteries and sealed lead-acid batteries.

A battery of the type indicated above is known from US-A-1 874 404, disclosing a battery wherein the negative plates are connected at the outer edge thereof by at least one lead bar. More specifically, this document discloses a multicell lead-acid battery where each of the electrode plates arranged in a stack has two lugs, each row of lugs of the same polarity being electrically connected by strap sets which in turn are connected to terminal posts.

Further, FR-A-2 267 643 discloses a similar stack arrangement whereby rows of electrode plate lugs of the same polarity are connected by strap sets to strap coupling means which provide intercell weld means.

Further, examples of plate lug / strap / intercell connector combinations are disclosed by US-A-4 780 379 and FR-A-2 576 150.

Generally, stationary batteries are specifically designed for float applications, that is, as standby power in the event of a power failure. Stationary batteries are maintained at a full state-of-charge and in a ready-to-use condition typically by floating at a constant preset voltage. Stationary batteries are used for standby or operational power in the communications field, utilities, for emergency lighting in commercial buildings and uninterruptible power supplies.

Uninterruptible power supplies are systems that back up computers and communications networks. Sealed lead-acid batteries may comprise the power source. The uninterruptible power source allows for the orderly shutdown of computers when there is a sudden interruption in the primary electrical source, such as during a power outage, and provides back-up power for communications networks. The uninterruptible power supply also will accommodate short, or intermittent losses in power. When there is a power interruption, the batteries in the uninterruptible power system can be subject to rapid discharge.

Over the years, a certain degree of standardization has occurred in uninterruptible power supply systems. Accordingly, batteries for such uninterruptible power supply systems must often meet certain prescribed physical size requirements to properly fit into standardized cabinetry and they must have a prescribed minimum capacity to meet or exceed minimum prescribed power requirements.

Often, the batteries for uninterruptible power supply systems are sealed lead-acid batteries that have a prismatic configuration. One of the most common prismatic configurations consists of alternating flat negative and positive plates spaced by one or more layers of separators. Typically, electrolyte is absorbed in the separators. The prismatic design has many advantages, including adaptability to complex plate design, satisfactory utilization of internal battery space, ease of fabrication, flexibility in choice of case materials and close control of plate spacing. The major disadvantage of the prismatic configuration is lower space utilization of the cell volume by electrode active material, compared to other designs, due in large measure to the fact that plates require head space for grid lugs, terminal post, terminal, intercell weld and possibly a vent assembly. The head space between the top of the plates and the underside of the cell cover are chemically, and thus electrically, unproductive because there is no electrode active material in the head space. Use of the tallest plates possible would often be preferred in order to increase the active material in a battery of a predetermined size and thereby increase the space utilization of the cell volume. Use of tall plates, in and of themselves, is not, however, without disadvantage due to additional resistance losses. Taller plates increase electrical resistance losses because the current path from the lower portion of the plate to the top of the terminal is increased, and the high rate discharge capability is thus decreased.

When a lead-acid battery is placed on discharge, the voltage of the battery initially drops abruptly due largely to the internal resistance of the battery. As the discharge proceeds, the rate at which the voltage decreases is slower due to the fact that the reactive materials, i.e., the sulfuric acid and active material, are reacting. Toward the end of discharge, the voltage falls more abruptly as the sulfuric acid and/or the active material of the plates become depleted so that they can no longer support the rate of discharge. When the battery (or cell) is placed on a high rate of discharge, as for example when large current is required in the event of a power outage and the uninterruptible power supply is engaged to supply the power requirements, the resistance of the battery, including its intercell connections, is important to the overall performance of the battery. According to Ohm's Law, the total voltage drop on discharge includes both the voltage drop across the terminals of the appliance to be powered and the internal resistance of the battery. The power loss of the cell increases with the square of the current. Internal resistance is expended in heating the cells and battery, and is lost. Particularly, then, at high rates of discharge, the watt-efficiency of the battery is reduced, and the useful power that the battery can give is limited.

It would be desirable, therefore, to provide a battery which, for a predetermined size, has increased capacity. It would also be desirable that the internal resistance of the battery is reduced.

Accordingly, a principal object of the present invention is to provide a lead-acid battery suitable for use in any application where there is a high rate of discharge. It is a particular object of the invention to provide a lead-acid battery suitable for use in uninterruptible power supply applications.

A further object is to provide a lead-acid battery in which the electrical storage capacity of the battery is increased for a battery of a prescribed physical size.

Another object of the present invention is to provide a lead-acid battery in which the internal space utilization of the cell is more efficient. A related object is to provide a lead-acid battery in which taller plates may be used to increase the internal space utilization for a battery of a prescribed physical size.

A further related object is to provide a lead-acid battery in which the head space in the battery is reduced for a battery of a prescribed physical size.

Yet another object of the invention is to provide a lead-acid battery in which the power output is improved. A related object is to provide a lead-acid battery in which the overall internal resistance of the battery is reduced. A more specific object of the invention is to provide a battery in which the strap resistance and the plate resistance of the battery is reduced.

A further object of the invention is to improve the energy from the battery by reducing the initial voltage loss of the battery when a load is placed on the battery.

A more specific object of the present invention is to provide a sealed, lead-acid battery, suitable for use in any application where there is a high rate of discharge, which has increased electrical storage capacity and has improved power output. It is also a related object to provide such a battery which has lower overall internal resistance.

These objects are accomplished by means of a battery of the type indicated at the outset and being characterized according to the present invention in that each of said positive plates have at least two lugs thereon and each of said negative plates have at least two lugs thereon, that the positive plate lugs and negative plate lugs are electrically coupled, respectively, by positive collector straps and negative collector straps into a set of like polarity plates, that the positive collector straps and the negative collector straps are electrically joined by strap coupling means and connected by bridging means, that the collector straps, inter cell weld means and bridging means of like polarity are cast onto their respective plate lugs as integral components, and that intercell weld means of each cell element is electrically coupled to intercell weld means of an adjacent cell element through said wall.

Thus, the present invention provides a galvanic cell and a multi-cell electric storage battery which includes a novel plate, strap and strap coupling means and intercell weld area configuration. The cell element comprises a stack of positive and negative polarity plates alternately interleaved with one another and separated by a suitable separator. The positive and negative plates each comprise at least two lugs and active material pasted to the grid. One of the lugs may be located on the plate in accordance with conventional practice, and the other lug or lugs may be located on the plate and spaced apart from the first lug. The cell element includes strap sets, for electrically coupling the sets of lugs of the respective positive and negative plates. Thus, one strap of the strap set electrically couples one of the lugs on the positive plates and another strap of the strap set electrically couples another of the lugs on the positive plates to provide a set of like polarity positive plates. Similarly, one strap of the strap set electrically couples one of the lugs on the negative plates and another strap of the strap set electrically couples another of the lugs on the negative plates to provide a set of like polarity negative plates. Where the positive and negative plates each include two lugs, the cell element includes a strap set, comprising a pair of straps for each type of plate, one strap of the set for electrically coupling each of a set of plate lugs.

In keeping with the invention, the cell element further includes strap coupling means common to the respective positive and negative strap sets for electrically coupling the strap sets of like polarity plate sets. The strap coupling means also provides means for making the intercell weld between adjoining cell elements to thereby electrically connect a plurality of cells to form a battery. Since the strap coupling means also provides the means for making intercell connections and thereby facilitates the intercell weld, the strap coupling means for the positive plates desirably joins the strap pairs of positive plates electrically at one end of the cell element and the strap coupling means for the negative plates desirably joins the strap pairs of negative plates electrically at the opposite end of the cell element. The intercell weld may thus be made via the strap coupling means and may be made over, or through a partition wall in the battery container, or the partition wall may be notched, contain an aperture, or the like, through which the intercell weld may be made. Inclusion of the strap coupling means at the end of the cell element allows the cells to be electrically coupled in series, in parallel, or in combination of series and parallel.

The novel lug, strap and strap coupling means and intercell weld area arrangement in accordance with the present invention decrease the internal resistance of the battery, improve the initial voltage loss of the battery when the battery is subjected to a discharge, especially a high rate of discharge, and they improve the power density of the battery for a battery of a predetermined physical size.

The above and other objects and advantages of the present invention will be apparent from the following description and drawings, wherein

Fig. 1 is a perspective view of a battery made in accordance with the present invention, partially cut away to show the internal configuration.

Fig. 2 is a sectional view of the lug and terminal arrangement of the battery taken along line 2-2 of Fig. 1.

Fig. 3 is a side sectional view of the plates and intercell weld connection of the cells of the battery taken along line 3-3 of Fig. 2.

Fig. 4 is a cross-sectional view of the intercell weld connection taken along line 4-4 of Fig. 2.

While the present invention is susceptible to various modifications and alternative forms, the preferred embodiments are illustrated in the drawings and will be described in detail. It is to be understood, however, that it is not intended to limit the invention to the preferred embodiments. On the contrary, it is intended to cover all modifications and alternative forms falling within the invention as expressed in the appended claims. For example, the invention is equally applicable to sealed lead-acid batteries, maintenance-free lead-acid batteries and flooded lead-acid batteries, regardless of intended application.

In general, the present invention is predicated on a novel grid, strap and strap coupling means and intercell weld arrangement to provide a battery having greater capacity for a predetermined physical size and having reduced internal resistance. In accordance with this aspect of the present invention, the battery comprises a plurality of cell elements. Each cell element comprises a stack of alternately interleaved positive and negative polarity plates separated by a suitable separator. Each of the positive and negative plates in the cell element comprises a grid which includes at least two lugs. One of the lugs is preferably located on the grid in a conventional manner. In keeping with this aspect of the invention, the grids include at least one added second lug located adjacent to, but spaced apart from, the first lug. Each of the lugs on the respective positive and negative grids is electrically coupled within the cell element by one of the straps of the strap set for the respective polarity plates. The strap sets thus electrically join the plates into sets of like polarity. A strap coupling means, one each for each of the positive plates and the negative plates of a cell element, electrically connects the strap sets of like polarity plate sets. The strap coupling means also provides a means for making the intercell weld between cell elements whereby a plurality of cells may be electrically connected.

In a battery in accordance with the present invention, the internal resistance of the battery is reduced. The addition of at least one other lug to the plate reduces the resistance in the plate because the current path within the plates to the lugs is reduced. Internal resistance of the battery is also reduced because the cross-sectional area of the path through which current is removed from the plate is increased. To that end, current passes through the lugs on the plates and then to the straps to the strap coupling means. Current is thus passed from the cell through the straps to the strap coupling means. Because of the added lugs and the added straps, the current path from the straps to and through the strap coupling means is increased and thus resistance is reduced. The electrical resistance of the strap coupling means and resulting intercell weld, when made, reduces substantially the electrical resistance from the center of the lug to the center of the strap coupling means and thus to the terminal. The reduction in the internal resistance of the battery results in a lower voltage drop when the battery is subjected to discharge. As a result, the energy efficiency of the battery is improved. Energy output is thus higher for a battery in accordance with the present invention than it would be for a comparable battery without the novel plate, strap and strap coupling means and intercell weld arrangement of the present invention.

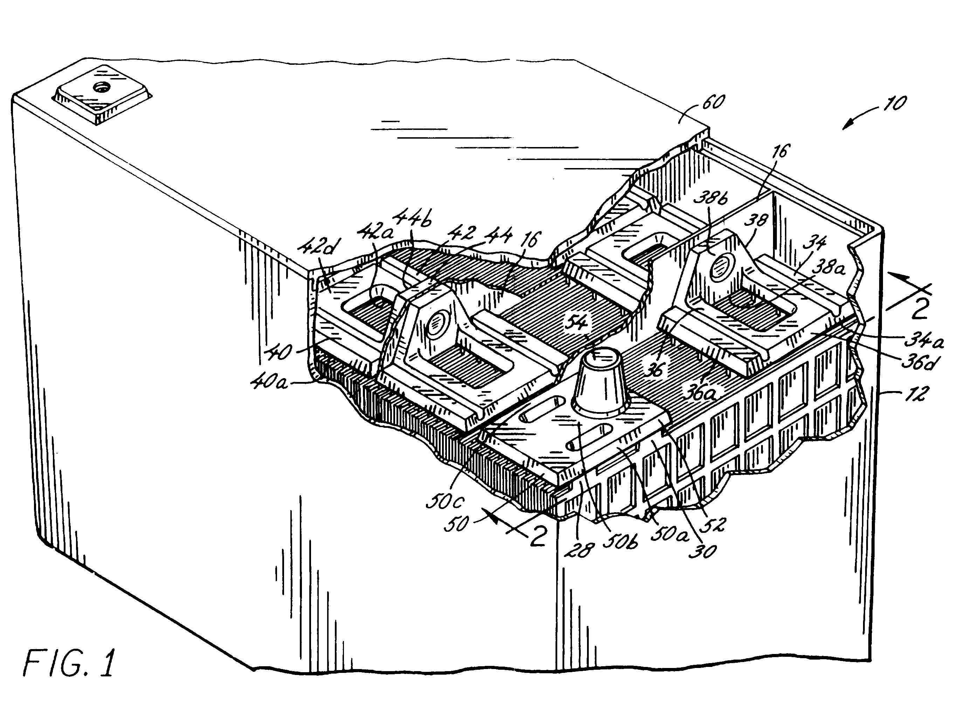

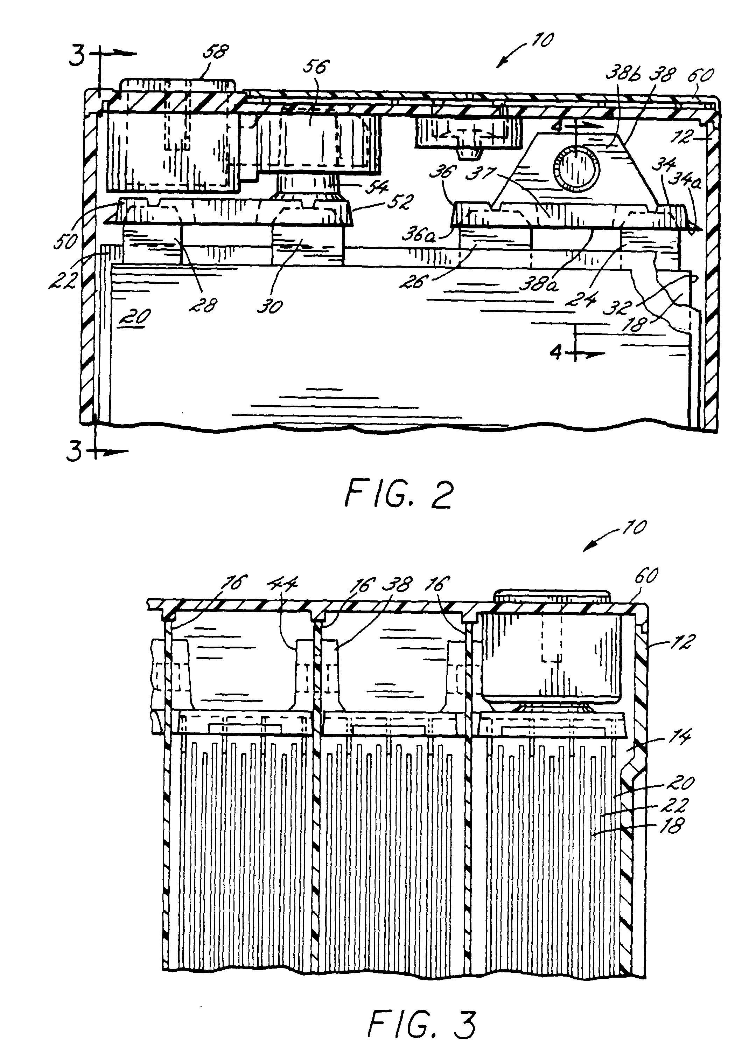

Turning to Fig. 1, there is illustrated a battery 10 made in accordance with the present invention. The battery 10 includes a container 12. Preferably the container 12 includes ribs on its sides to assist in the thermal management of the battery. As best seen in Fig. 3, container 12 houses a plurality of cell elements 14, each of which is separated within the container by a partition wall 16. Each cell element 14 includes a plurality of positive plates 18 and a plurality of negative plates 20 interleaved and separated by a separator 22 and arranged in a stack. In the illustrated embodiment of the invention, as shown, for example, in Fig. 3, in each cell element 14 the number of negative plates 20 exceeds the number of positive plates 18 by one so that the cell element has a negative plate on each end of the stack of plates. It will be appreciated, however, that the number of positive plates and the number of negative plates may be equal, or the number of positive plates may exceed by one the number of negative plates so that a positive plate will be on each end of the cell element.

In accordance with the invention, as illustrated in Fig. 2, each positive plate 18 and each negative plate 20 includes at least two, and preferably, a pair, of lugs 24, 26 and 28, 30, respectively. Turning first to the positive plates 18, in the illustrated embodiment of the invention shown in Fig. 2, each positive plate 18 includes an inboard lug 26 and an outboard lug 24 adjacent to, but spaced apart from, the inboard lug 26. Preferably inboard lug 26 is positioned on the plate in the same location as it is on a conventional plate, that is, the center of inboard lug 26 is at from about one to about one and one-quarter inches from the centerline of the plate. Outboard lug 24 is positioned toward the outer side edge 32 of positive plate 18 and outboard of the inboard lug 26. The precise location of both the outboard lugs 24 and inboard lugs 26 may be varied as a matter of design choice without departing from the invention.

Each of the lugs 24, 26 in cell element 14 is electrically connected by one strap of the strap set that joins plates of like polarity. Thus, outboard strap 34 electrically connects each of the outboard lugs 24 of the plurality of positive plates 18 in cell element 14, and a second, inboard, strap 36 electrically connects each of the inboard lugs 26 of the positive plates 18 in cell element 14. The positive plates, the lugs 24, 26 and straps 34 and 36 are typically comprised of lead or lead alloy. Electrical connection of the straps to the lugs may thus be made by welding or casting the respective straps to the respective lugs of the plates to form a plate set of like polarity plates.

As can be seen in Figs. 1 and 3, in keeping with the invention, straps 34 and 36 are electrically joined together by strap coupling means 38. It is preferred that strap coupling means 38 electrically join straps 34 and 36 at one end of the cell element, as for example at partition wall 16, so that strap coupling means 38 may also provide means for forming the intercell weld. Strap coupling means 38 may be of any desired shape or configuration consistent with electrically connecting it to the straps, and interconnecting the straps. Strap coupling means 38 is preferably comprised of lead or a lead alloy.

Electrical coupling of strap coupling means 38 to straps 34, 36 may be made by welding or casting strap coupling means 38 to the straps. In the alternative, strap coupling means 38 and straps 34 and 36 may be formed as an integral component, as, for example, by casting. The integral component comprising the cast straps and strap coupling means may then be electrically connected to the lugs by fusing the straps to the lugs, as for example, by welding. In another alternative, the straps and strap coupling means may be cast onto the lugs.

The manner in which strap coupling means 38 is electrically coupled to straps 34, 36 is susceptible to numerous variations and design choices. For example, as shown in the preferred embodiment in Figs. 1, 2 and 4, strap coupling means 38 is electrically coupled to straps 34, 36, or formed as an integral component with straps 34, 36, so that the bottom 38a of strap coupling means 38 and the bottoms 34a, 36a of straps 34, 36 are in line, that is, they lie in the same plane. Coupling strap coupling means 38 to straps 34, 36 so that the bottom of the strap coupling means 38 lies in the same plane with the bottoms 34a, 36a of straps 34,36 allows the height of the intercell weld to be minimized. Minimization of the intercell weld height reduces the head space that would otherwise be required between the top of the plates and the underside of the battery cover. As a result, taller plates may be used, and a greater amount of active material may be included in the cell element so that unproductive head space in the battery may be reduced. For a container of a pre-determined size, the capacity of the battery may be increased by the use of taller plates. It will be appreciated that strap coupling means 38 may be joined to straps 34, 36 or formed as an integral component with the straps so that the bottom 38a of strap coupling means lies in the same plane as the top of the straps 34, 36. While this arrangement may achieve some of the benefits of the present invention, that is to say, reduced internal resistance, it will not minimize the head space of a battery for a predetermined size. It should also be appreciated that strap coupling means 38 may be joined to straps 34, 36 at any point in between the bottoms and tops of the straps. It is preferred, however, for the reasons stated above, that the strap coupling means be joined to the straps so that the bottom of strap coupling means and the bottom of the straps lie in the same plane.

Turning to Fig. 2, in like manner to the positive plates, the negative plates 20 each include a pair of lugs 28, 30. The negative plate lugs may be located on the negative plates in a mirror image to the location of the lugs on the positive plates, although the precise locations of the negative plate lugs is a matter of design choice. Each of the lugs 28, 30 in the cell element is electrically connected by one strap of the strap set that joins plates of like polarity. As shown in Fig. 1, the outboard lugs 28 of the negative plates in the cell element are electrically connected by outboard strap 40 and the inboard lugs of the negative plates are electrically connected by inboard strap 42. Also, as with the positive plates, the negative plates, lugs 28, 30 and straps 40, 42 are typically comprised of lead or lead alloy. Electrical connection of the straps to the lugs may be made by welding or casting the respective straps to the respective lugs of the negative plates to form a plate set of like polarity plates.

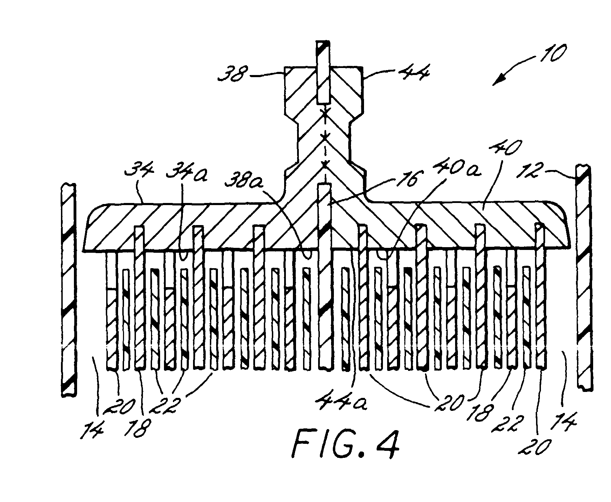

As illustrated in Figs. 1 and 4, strap coupling means 44 is electrically connected to straps 40, 42. As with the positive plate set, strap coupling means 44 is preferably electrically connected to straps 40, 42 at one end of the cell element, as for example at partition wall 16 (shown cut away), so that strap coupling means 44 may also provide means for forming the intercell weld. Strap coupling means 44, like strap coupling means 38, may be of any desired shape or configuration consistent with electrically coupling it to the straps and interconnecting the straps. Similarly, strap coupling means 44 is preferably comprised of lead or lead alloy.

As in the case with strap coupling means 38, strap coupling means 44 may be formed as an integral component with straps 40 and 42. The integral component may then be electrically connected to the lugs through the straps by welding or casting the configuration to the lugs. Alternatively, the strap and strap coupling means may be cast onto the lugs.

When the strap coupling means and straps are cast as an integral component, the integral component may also include bridging means 36d, 42d (as shown in Fig. 1). Bridging means 36d ,42d result from the configuration of the cavity mold which includes a pathway for molten metal to flow from one side of the mold to the other in a sufficiently short time period to prevent the cast liquid metal from freezing. Bridging means 36d, 42d may improve the strength and integrity of the integral component, but the bridging means 36d, 42d are not essential attributes of the current collection capabilities of the integral component.

As with strap coupling means 38 and straps 34, 36, the manner in which strap coupling means 44 is electrically connected to straps 40, 42 is susceptible to various design choices. In the preferred embodiment, as shown in Fig. 4, strap coupling means 44 is preferably joined to the straps, or formed as an integral component with the straps, so that the bottom 44a of strap coupling means 44 and the bottoms 40a, 42a of straps 40, 42 lie in the same plane as shown, in order to minimize the head space required for the upper portion 44b of strap coupling means 44 that forms the means for the intercell connection.

As illustrated in Fig. 4, when adjacent cells are connected in series, the intercell connection is made through strap coupling means 38 of the positive plate set of one cell element and strap coupling means 44 of the negative plate set of the adjacent cell element. In the illustrated embodiment shown in Fig. 4, strap coupling means 38 and 44 have been fused through partition wall 16.

The cell elements which include the terminals of the battery may also utilize the novel grid, and strap assembly in accordance with the present invention. To that end, as illustrated in Fig. 2, the negative plates 20 include at least two lugs 28, 30. Lugs 28 are electrically coupled by strap 50 and lugs 30 are electrically coupled by strap 52. As shown in Fig. 1, straps 50 and 52 may be bridged with electrically conductive material such as lead, as for example, as shown at 50a, 50b and 50c. The straps also include post 54. The post 54 may be formed with the straps 50, 52 as an integral component, or it may be fused to the straps for electrical connection. As can be seen in Fig. 2, post 54 mates with bushing 56 which is included in the cover 60 of the battery. Bushing 56 also includes terminal 58, which may comprise copper.

Several parameters may be varied depending on the performance requirement demanded of the battery for specific applications. By way of illustration, the dimensions of the lugs, and in particular the outboard lugs may be varied. For example, for high current draw batteries, the outboard lug may be narrowed to accommodate a larger diameter intercell weld while maintaining a sufficient amount of lead mass surrounding the intercell weld to minimize internal resistance. Further, by way of example, the strap coupling means may be thickened to counterbalance an increase in resistance, if any, caused by a narrower strap and/or an increase from the center of the lug to the center of the weld.

The novel lug, strap, and strap coupling means and intercell weld arrangement in accordance with this aspect of the present invention substantially improves the collection and flow of current in the batteries of the present invention. The second added lug assists with the current collection from the plate. The current path is theoretically, from the plate to the lug, through the center of the lug, to the center of the strap, and then to the center of the intercell weld. In the battery according to the present invention, because of the added lug, the straps joining the lugs, and the strap coupling means electrically connecting the straps, the cross sectional area of the current path is increased, and perhaps doubled, compared to a battery with a conventional strap and intercell weld design. The resistance realized from the center of the lug to the center of the weld is thus substantially reduced, for example on the order of by about fifty percent. Accordingly, the internal resistance of the battery is also lower.

Because the bottom of the strap coupling means and the bottoms of the plate straps lie in the same plane in the preferred embodiment, the height requirement of the straps and strap coupling means, and thus for the intercell connections is minimized and less head space is needed to make the intercell welds. As a result, taller plates with additional active material may also be utilized in the battery. The additional active material provides a battery with more capacity. Accordingly, the batteries of the present invention can have a higher energy density than comparably sized batteries that do not include the novel lug, strap, and strap coupling means and intercell weld arrangement of the present invention.

The battery container 12 is preferably a high strength, flame retardant, recyclable material, that will maximize volume efficiency and thermal management characteristics of the battery. Preferably container 12 is made from a polyphenylene oxide resin such as Noryl® made by General Electric Corporation. In addition, container 12 preferably includes ribs on its sides to increase its surface area and heat distribution, and thereby assist in the thermal management of the batteries. The ribs also strengthen the sides of the container while reducing the required thickness of the container walls.

The positive and negative grids may comprise lead or any of a variety of lead alloys. For example, antimony-free lead alloys, such as lead-tin, lead-tin-calcium and lead-tin-selenium, may be used for the negative grid, and lead alloys such as lead-tin, lead-tin-calcium, lead-tin-selenium and lead-antimony may be used for the positive grid.

In sealed lead-acid cells, it is desirable to use for the positive grid an alloy that will not cause excessive gassing, will exhibit adequate cycling performance, will be capable of deep discharge recovery, and especially for use in uninterruptible power supply applications, will exhibit a corrosion rate suitable for a ten year life. The positive grid may comprise, for example, a lead, tin, selenium alloy or a low-antimony lead alloy, such as that disclosed in U.S. Patent No. 4,401,730.

The positive grids can be pasted and cured by known techniques. Positive paste density of about 3.6 to 4.3 g/cm³ are useful. It is believed that the paste density can be lower, if desired; and, indeed, such lower paste density should increase active material utilization. Leady, litharge and red lead oxide are equally suitable for use in making the paste. Also, other than adjustments to provide the desired density, conventional paste formulations may be employed.

The negative active material may be formed, as is known, from a leady, or litharge oxide. In oxygen recombinant cells, the density should be sufficiently low so as to increase the apparent surface area of the electrodes to provide the desired oxygen recombination reaction rate. To that end, the density is suitably in the range of about 3.6-to-4.5 g/cm³.

The material used for the separators should be stable in the sulfuric acid electrolyte used, resistant to oxidation by PbO₂ and not release materials into the electrolyte which would deleteriously effect cell performance. Separator materials known to those skilled in the art may be used in the practice of the invention.

## Claims

1. A battery (10) including at least two cell elements (14) separated by a wall (16), the cell elements (14) having a plurality of positive plates (18) and negative plates (20) alternately interleaved with one another, characterized in that each of said positive plates (18) have at least two lugs (24, 26) thereon and each of said negative plates (20) have at least two lugs (28, 30) thereon, that the positive plate lugs (24, 26) and negative plate lugs (28, 30) are electrically coupled, respectively, by positive collector straps (34, 36) and negative collector straps (40, 42) into a set of like polarity plates, that the positive collector straps (34, 36) and the negative collector straps (40, 42) are electrically joined by strap coupling means (38, 44) and connected by bridging means (36d, 42d), that the collector straps (34, 36, 40, 42), intercell weld means (38, 44) and bridging means (36d, 42d) of like polarity are cast onto their respective plate lugs (24, 26, 28, 30) as integral components, and that intercell weld means (38, 44) of each cell element (14) is electrically coupled to intercell weld means (38, 44) of an adjacent cell element (14) through said wall (16).

2. The battery (10) of claim 1 wherein said weld means (38, 44) and their associated collector straps (34, 36, 40, 42) are joined so that the bottom of each weld means (38, 44) and the bottoms of its associated collector straps (34, 36, 40, 42) lie in the same plane.

3. The battery (10) of claim 1 wherein each of said positive plates (18) and each of said negative plates (20) has two lugs.

4. The battery (10) of claim 1 or 2 wherein said battery (10) is a sealed lead-acid battery.

## Patentansprüche

1. Batterie (10), die mindestens zwei Zellenelemente (14) enthält, die durch eine Wand (16) getrennt sind, wobei die Zellenelemente (14) eine Vielzahl von positiven Platten (18) und negativen Platten (20) aufweisen, die einander abwechseln,
dadurch gekennzeichnet, daß jede der positiven Platten (18) mindestens zwei Fahnen (24, 26) aufweist und jede der negativen Platten (20) mindestens zwei Fahnen (28, 30) aufweist, daß die Fahnen der positiven Platten (24, 26) und die Fahnen der negativen Platten (28, 30) jeweils durch positive Sammelschienen (34, 36) und negative Sammelschienen (40, 42) zu einem Satz von Platten gleicher Polarität elektrisch gekoppelt sind, daß die positiven Sammelschienen (34, 36) und die negativen Sammelschienen (40, 42) durch Schienenverbindungseinrichtungen (38, 44) elektrisch zusammengeschlossen und durch Überbrückungseinrichtungen (36d, 42d) verbunden sind, daß die Sammelschienen (34, 36, 40, 42), geschweißten Zellenverbindungseinrichtungen (38, 44) und Überbrückungseinrichtungen (36d, 42d) gleicher Polarität als integrale Komponenten auf ihre jeweiligen Plattenfahnen (24, 26, 28, 30) gegossen sind und daß die geschweißte Zellenverbindungseinrichtung (38, 44) jedes Zellenelements (14) mit der geschweißten Zellenverbindungseinrichtung (38, 44) eines benachbarten Zellenelements (14) durch die genannte Wand (16) hindurch elektrisch verbunden ist.

2. Batterie (10) nach Anspruch 1, worin die geschweißten Einrichtungen (38, 44) und die ihnen zugeordneten Sammelschienen (34, 36, 40, 42) so verbunden sind, daß die Unterseite jeder geschweißten Einrichtung (38, 44) und die Unterseiten ihrer zugeordneten Sammelschienen (34, 36, 40, 42) in derselben Ebene liegen.

3. Batterie (10) nach Anspruch 1, worin jede der positiven Platten (18) und jede der negativen Platten (20) zwei Fahnen aufweist.

4. Batterie (10) nach Anspruch 1 oder 2, worin diese Batterie (10) ein geschlossener Bleiakkumulator ist.

## Revendications

1. Batterie d'accumulateurs (10) comprenant au moins deux éléments (14) d'accumulateur séparés par une paroi (16), les éléments (14) d'accumulateur ayant plusieurs plaques positives (18) et plaques négatives (20) imbriquées en alternance, caractérisée en ce que chacune des plaques positives (18) possède au moins deux pattes (24, 26) et chacune des plaques négatives (20) possède au moins deux pattes (28, 30), en ce que les pattes (24, 26) des plaques positives et les pattes (28, 30) des plaques négatives sont couplées électriquement respectivement par des barrettes collectrices positives (34, 36) et des barrettes collectrices négatives (40, 42) dans un ensemble de plaques de polarité identique, en ce que les barrettes collectrices positives (34, 36) et les barrettes collectrices négatives (40, 42) sont raccordées électriquement par un dispositif (38, 44) d'accouplement de barrettes et connectées par un dispositif (36d, 42d) de pontage, en ce que les barrettes collectrices (34, 36, 40, 42), des dispositifs de soudage (38, 44) entre les éléments et des dispositifs de pontage (36d, 42d) de polarité identique sont moulés sur les pattes (24, 26, 28, 30) des plaques respectives sous forme d'éléments solidaires, et en ce que le dispositif (38, 44) de soudage entre les éléments (14) d'accumulateur est couplé électriquement au dispositif (38, 44) de soudage entre les éléments adjacents d'accumulateur (14) à travers la paroi (16).

2. Batterie d'accumulateurs (10) selon la revendication 1, dans laquelle le dispositif de soudage (38, 44) et les barrettes collectrices associées (34, 36, 40, 42) sont raccordés afin que la partie inférieure de chaque dispositif de soudage (38, 44) et les parties inférieures des barrettes collectrices associées (34, 36, 40, 42) se trouvent dans le même plan.

3. Batterie d'accumulateurs (10) selon la revendication 1, dans laquelle chacune des plaques positives (18) et chacune des plaques négatives (20) possèdent deux pattes.

4. Batterie d'accumulateurs (10) selon la revendication 1 ou 2, dans laquelle la batterie (10) est une batterie acide au plomb de type étanche.
